# EUROPÄISCHE PATENTANMELDUNG

(11) **EP 0 658 752 A1**
(43) Veröffentlichungstag der Anmeldung: **21.06.1995**
(21) Anmeldenummer: 94250288.1
(22) Anmeldetag: 01.12.1994
(51) Int. Cl.: G01K 1/16

(54) **Thermometeranordnung**

(30) Priorität: 15.12.1993 DE 4343532
(71) Anmelder: MANNESMANN Aktiengesellschaft, D-40213 Düsseldorf (DE)
(72) Erfinder: Czermak, Viktor, D-60598 Frankfurt (DE)
(74) Vertreter: Meissner, Peter E., Dipl.-Ing.

(57) **Zusammenfassung**

Die Erfindung betrifft eine Thermometeranordnung mit mindestens einem temperatursensitiven Element, welches innerhalb einer einseitig geschlossenen Hülse angeordnet und mit elektrischen Anschlußmitteln verbunden ist. Um bei einer derartigen Thermometeranordnung die Punktförmigkeit der Temperaturmessung zu steigern, und das thermosensitive Element dennoch geschützt anzuordnen, ist erfindungsgemäß vorgeschlagen, daß innerhalb der Hülse (6) Mittel (2, 20) eingebracht sind, und daß die Hülse (6) mit den elektrischen Anschlußmitteln (4, 5) im montierten Zustand mechanisch derart verbunden ist, daß das temperatursensitive Element (1) an den Boden (9) der Hülse (6) kraftschlüssig über die eingebrachten Mittel angepreßt ist.

## Beschreibung

Die Erfindung betrifft eine Thermometeranordnung mit mindestens einem temperatursensitiven Element, welches innerhalb einer einseitig geschlossenen Hülse angeordnet und mit elektrischen Anschlußmitteln verbunden ist.

Thermometeranordnungen dieser Art sind vielfach gebräuchlich und beispielsweise aus einem dokumentierten Vortrag, Tempcon Conference London, Juni 1978, von Joachim Scholz, veröffentlicht im Katalog "Degussa-Meßtechnik" mit dem Titel: "Punktförmige Temperaturmessung mit Widerstandsthermometern", bekannt. In dieser Dokumentation sind im wesentlichen Widerstandsthermometer, jedoch auch Thermoelemente in entsprechender Thermometeranordnung beschrieben. Es findet dabei eine becherförmige Hülse Verwendung, die zumindest vor Montage einseitig geöffnet ist, und in die das temperatursensitive Element, Thermoelement oder der Thermowiderstand, welches bzw. welcher mit Anschlußleitungen verbunden ist, eingeführt wird.

Üblicherweise werden nach Einführen der bzw. des thermosensitiven Elementes die Hülsen beispielsweise mit Aluminiumoxidpulver gefüllt, und verdichtet, und anschließend wird die Hülse an der noch offenen Seite verschlossen. Die Anforderung für punktförmige Temperaturmessung bedeutet hier, daß die gesamte Anordnung möglichst kleinbauend sein sollte, da die sogenannte "punktförmige" Temperaturmessung in solchen bekannten Anordnungen auf die Längen- oder Größenabmessungen der Hülse beschränkt bleibt. Um hierbei die Punktförmigkeit der Temperaturmessung noch weitergehend zu steigern, sind auch bekannte Anordnungen vorgegeben, bei denen das temperatursensitive Element an einer Öffnung der Hülse direkt mit dem zu messenden Medium in mechanischen kontakt zu bringen ist. Dafür muß das Thermoelement entweder mit der entsprechend zu vermessenden Oberfläche direkt verbunden, oder das thermosensitive Element an einer Öffnung der Hülse austreten, um an der zu vermessenden Oberfläche anliegen zu können.

Hieraus ergeben sich eine Reihe von Nachteilen. Ist die Hülse im Bereich des empfindlichen thermosensitiven Elementes nicht mehr geschlossen, sondern offen, so ist das thermosensitive Element der Verschmutzung, sowie dem Angriff von chemischen Substanzen ausgesetzt. Für den erstgenannten obigen Fall, in dem das thermosensitive Element lose in einer Hülse angeordnet ist, ergibt sich eine schlechte Ortsauflösung, sowie eine träge Temperaturmessung.

Der Erfindung liegt daher die Aufgabe zugrunde, eine Thermometeranordnung der gattungsgemäßen Art derart weiterzubilden, daß die Punktförmigkeit der Temperaturmessung gesteigert, und das thermosensitive Element dennoch geschützt angeordnet ist.

Die gestellte Aufgabe wird bei einer Thermometeranordnung der gattungsgemäßen Art erfindungsgemäß durch die kennzeichnenden Merkmale des Patentanspruches 1 gelöst.

Weitere vorteilhafte Ausgestaltungen der Erfindung sind in den Unteransprüchen angegeben.

Kern der Erfindung besteht darin, daß die Anordnung der einzelnen Elemente aus denen die Thermometeranordnung besteht, orts- und funktionsmäßig so zueinander positioniert sind, daß das temperatursensitive Element nach Herstellen des montierten Zustandes über die Einzelelemente und die Verbindung der Hülse mit der Mantelleitung an den Boden der Hülse angepreßt wird. Hierdurch wird eine gegenüber bekannten Thermometeranordnungen höhere Punktförmigkeit der Temperaturmessung ermöglicht. Die Erfindung beinhaltet zwei Ausführungsformen. Die erste Ausführungsform besteht darin, daß die Mantelleitung soweit in die Hülse eingeschoben wird, bis die elektrischen Anschlußmittel mechanisch an einem Isolatorteil anliegen, welches das temperatursensitive Element an den Boden der Hülse anpreßt. Ist dieser Zustand bei Montage erreicht, dann wird die Mantelleitung mit der Hülse verschweißt. In dieser Ausführungsform werden die elektrischen Anschlußmittel gleichzeitig mechanisch, d. h. statisch beaufschlagt, und bewirken durch die ortsmäßige Fixierung durch die Verschweißung von Hülse und Mantelleitung ein Andrücken des temperatursensitiven Elementes. In der zweiten Ausführungsform wird zwischen Mantelleitung und dem Isolatorteil, welches letztendlich das temperatursensitive Element unter Krafteinwirkung auf den Boden der Hülse andrückt, eine Feder zwischengeordnet, um mögliche Temperatureffekte auszugleichen.

Die Erfindung ist in der Zeichnung dargestellt und im nachfolgenden näher beschrieben.

Es zeigt:
Figur 1 Gesamtdarstellung der Thermometeranordnung
Figur 2 Detaildarstellung der Thermometerspitze; 1. Ausführunsform
Figur 3 Detaildarstellung der Thermometerspitze; 2. Ausführungsform

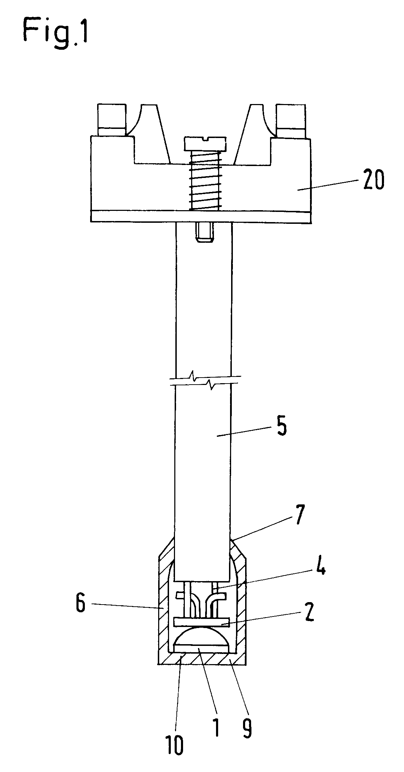

Figur 1 zeigt in gesamter Darstellung die Thermometeranordnung. Im oberen Bildteil ist ein Anschlußsockel 20 dargestellt, welcher handelsüblich ausgestaltet ist. Die erfindungswesentlichen Elemente finden sich an der Spitze der Thermometeranordnung. Das Anschlußkabel wird in einem Mantel als Mantelleitung 5 geführt. An der Spitze treten aus dieser Mantel Leitung 5 die Innenleiter 4 aus. Innerhalb der Hülse 6, in dem das thermosensitive Element 1 angeordnet ist, ist die Kontaktierung in entsprechend erfindungsgemäßer Ausgestaltung und erfindungsgemäßer Wirkung plaziert. Die Innenleiter 4 sind über eine entsprechende Länge abgesetzt, d. h. von einer möglichen Isolierung befreit. Die Hülse 6 ist dabei über den Mantel der Mantelleitung 5 geschoben. Dabei wird die Hülse 6 soweit auf den Mantel der Mantelleitung 5 aufgeschoben, bis die Innenleiter 4 über ein Keramikteil 2 den Meßwiderstand 1 an den Boden 9 der Hülse 6 andrücken. Ist dies erreicht, so wird die Hülse mit dem Mantel der Mantelleitung 5 über die Verschweißung 7 verbunden.

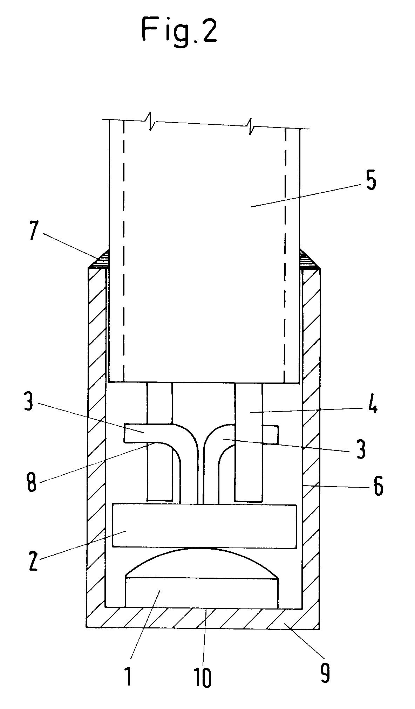

Figur 2 zeigt diesen in Figur 1 bereits dargestellten Bereich der Spitze der Thermometeranordnung nochmals im Detail. Daraus ist erkennbar, daß die Innenleiter 4 mit weiteren Anschlußdrähten 3 des Meßwiderstandes 1 über möglicherweise eine Laserverschweißung 8 verbunden sind. Diese Verbindung zwischen Innenleiter 4 und Anschlußdrähten 3 dient jedoch nur der elektrischen Kontaktierung und hat keine mechanische statische Wirkung. Bei der Wahl einer solchen Anordnung zueinander, sowie der Abstützung über das isolierende Keramikteil 2, haben die in die Hülse geführten Innenleiter 4 sowohl die statische Abstützfunktion, um den Meßwiderstand 1 an den Boden 9 der Hülse anzudrücken, als auch die Funktion kontaktierbare Leitungen herauszuführen, welche dann zur Herstellung eines elektrischen Kontaktes mit den Anschlußdrähten 3 verbunden sind. Die Punktförmigkeit der Temperaturmessung wird dadurch gesteigert, daß der Meßwiderstand 1 unter Bewerkstelligung eines möglichst kleinen thermischen Übergangswiderstandes an den Boden 9 angepreßt ist, wobei die Abstützung über das Keramikteil 2 bewirkt, daß keine Wärme über andere Bereiche der Thermometeranordnung abfließen kann. Das Keramikteil bewirkt damit trotz des mechanischen Kontaktes mit dem Meßwiderstand 1 keine nennenswerte Abführung von thermischer Energie. Um die Temperatursensitivität noch weiter zu erhöhen, ist es auch möglich, den Meßwiderstand 1 bzw. das temperatursensitive Element über Wärmeleitpaste oder geschmolzenes und wiederverfestigtes Metall am Boden 9 der Hülse 6 anzubringen. Um eine gewisse Elastizität der elektrischen Kontaktierung zu gewährleisten, sind die Anschlußdrähte 3 als Drahtschlaufen angelegt. Die Anschlußdrähte 3 sind dabei durch hier nicht dargestellte Öffnungen durch das Isolatorteil, bzw. Keramikteil 2 hindurch zum Meßwiderstand geführt. Unter den bereits genannten Bedingungen besteht die Hülse 6 vorteilhafterweise aus elektrisch besonders leitfähigem Material. Dies beruht auf der Erkenntnis, daß gute elektrische Leiter auch gute Wärmeleiter sind. Darüber hinaus ist es aber auch möglich bzw. vorteilhaft, daß der Boden 9 der Hülse 6 aus einem elektrischen leitfähigerem Material als die übrige Hülse 6 besteht. Dies bedeutet dann konstruktiv, daß die Hülse 6 segmentiert ist, in einen Bereich den man als Hülsenmantel bezeichnen kann und einen darin einlegbaren Boden 9, der nach dieser Ausgestaltung aus einem elektrisch leitfähigerem Material als die übrige Hülse besteht. Auch dies würde die Punktförmigkeit der Temperaturmessung steigern.

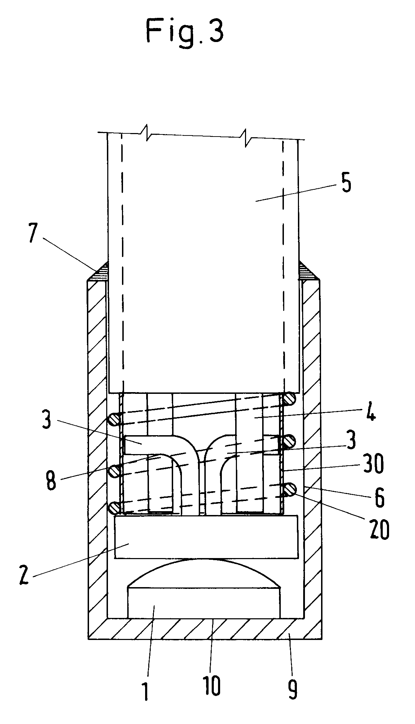

Figur 3 zeigt eine zweite erfindungsgemäße Ausführungsform, die sich von Figur 2 darin unterscheidet, daß zwischen Mantelleitung 5, und Isolatorteil 2 noch zusätzlich eine Feder 20 eingebracht ist. Diese Feder 20 bewirkt, daß die Anschlußdrähte 4 statisch nicht beaufschlagt werden, und im Normalfall nicht direkt am Isolatorteil 2 anliegen. Jedoch auch hierbei ist gewährleistet, daß im montierten Zustand aller Einzelelemente das temperatursensitive Element über die eingebrachten Mittel an den Boden der Hülse angepreßt wird. Um diesen Anpreßzustand mechanisch ein zufrieren, d. h. zu fixieren wird auch nach der Ausführungsform gemäß Figur 3 nach dem die Feder krafteinwirkend auf dem Isolatorteil 2 anliegt und sich an der Mantelleitung 5 abstützt, die Mantelleitung 5 mit der Hülse 6 über die Verschweißung 7 verbunden. Auch hierbei sind die Anschlußleitungen 4 mit Anschlußdrähten 3 verbunden, welche an den Anschlußleitungen angepunktet sind, wobei die Anschlußdrähte 3 als Drahtschlaufen und durch das Isolatorteil 2 hindurchgelegt sind und bis zum temperatursensitiven Element 1 reichen, an dem sie elektrisch angeschlossen sind. Die Drahtschlaufen bewirken hier, sowie bei der Ausführung in Figur 2, daß eine gewisse axiale Elastizität vorhanden ist, um zu gewährleisten, daß thermische Effekte nicht zum Abreißen des elektrischen Kontaktes führen können. Zur Isolation der Feder 20, die beispielsweise ja auch metallisch sein kann, aber nicht sein muß, kann ein Rohrabschnitt 30 vorgesehen werden, der innerhalb der Feder 20 angeordnet ist, und die elektrischen Anschlußmittel 4, umschließt. In dem Falle, daß die Feder 20 metallisch ist, soll der Rohrabschnitt 30 aus elektrisch isolierendem Material bestehen. Über die Isolationswirkung hinaus hat der Rohrabschnitt 30 auch die Funktion, die Feder 20 exakt zu führen.

Die gesamte Anordnung kann im Bereich der Hülse auch noch mit Sand ausgefüllt sein.

## Patentansprüche

1. Thermometeranordnung mit mindestens einem temperatursensitiven Element, welches innerhalb einer einseitig verschlossenen oder einseitig geschlossenen Hülse angeordnet und mit elektrischen Anschlußmitteln verbunden ist,
dadurch gekennzeichnet,
daß die Hülse (6) mit den elektrischen Anschlußmitteln (4, 5) im montierten Zustand mechanisch derart verbunden ist, daß das temperatursensitive Element (1) an den Boden (9) der Hülse (6) kraftschlüssig über in die Hülse (6) eingebrachte Mittel (2, 20) angepreßt ist.

2. Thermometeranordnung nach Anspruch 1,
dadurch gekennzeichnet,
daß die eingebrachten Mittel im wesentlichen aus einem Isolatorteil (2) bestehen, welches im montierten Zustand über die mechanische Einwirkung der elektrischen Anschlußmittel (4, 5) das temperatursensitive Element (1) an den Boden (9) der Hülse (6) andrückt.

3. Thermometeranordnung nach Anspruch 1,
dadurch gekennzeichnet,
daß die eingebrachten Mittel im wesentlichen aus einem Isolatorteil (2) und einer Feder (20) bestehen, und im montierten Zustand sich die Feder (20) an der einen Seite mechanisch an den elektrischen Anschlußmitteln (5), und an der anderen Seite an dem Isolatorteil (2) abstützt, und das temperatursensitive Element (1) an den Boden (9) der Hülse (6) anpresst.

4. Thermometeranordnung nach Anspruch 2 oder 3,
dadurch gekennzeichnet,
daß die elektrischen Anschlußmittel aus einer Mantelleitung (5) mit darin angelegten Anschlußdrähten (4) bestehen.

5. Thermometeranordnung nach Anspruch 2 oder 4,
dadurch gekennzeichnet,
daß die Hülse (6) mit dem Mantel der Mantelleitung (5) verbindbar ist und das Andrücken des temperatursensitiven Elementes (1) über die aus der Mantelleitung (5) austretenden Innenleiter (4) erfolgt, welche die mechanische Krafteinwirkung auf das Isolatorteil haben.

6. Thermometeranordnung nach einem oder mehreren der vorhergehenden Ansprüche,
dadurch gekennzeichnet,
daß die aus der Mantelleitung (5) austretenden Innenleiter (4) mit zu Drahtschlaufen geformten Anschlußdrähten (3) des temperatursensitiven Elementes (1) verbunden sind.

7. Thermometeranordnung nach einem oder mehreren der vorhergehenden Ansprüche,
dadurch gekennzeichnet,
daß die Anschlußdrähte (3) des temperatursensitiven Elementes durch das Isolatorteil hindurchgeführt sind.

8. Thermometeranordnung nach einem oder mehreren der vorhergehenden Ansprüche,
dadurch gekennzeichnet,
daß die Mantelleitung (5) einen Metallmantel enthält, und die Verbindung der Hülse (6) mit der Mantelleitung (5) über eine Verschweißung erfolgt.

9. Thermometeranordnung nach einem oder mehreren der vorhergehenden Ansprüche,
dadurch gekennzeichnet,
daß das Isolatorteil (2) vorzugsweise aus Keramik besteht.

10. Thermometeranordnung nach einem oder mehreren der vorhergehenden Ansprüche,
dadurch gekennzeichnet,
daß die Hülse (6) aus einem elektrisch besonders leitfähigen Material besteht.

11. Thermometeranordnung nach einem oder mehreren der vorhergehenden Ansprüche,
dadurch gekennzeichnet,
daß der Boden (9) der Hülse (6) aus einem elektrisch leitfähigeren Material als die übrige Hülse (6) besteht.

12. Thermometeranordnung nach einem oder mehreren der vorhergehenden Ansprüche,
dadurch gekennzeichnet,
daß das temperatursensitive Element (1) zusätzlich mit dem Boden (9) der Hülse (6) über eine Wärmeleitpaste verklebt ist.

13. Thermometeranordnung nach einem oder mehreren der vorhergehenden Ansprüche,
dadurch gekennzeichnet,
daß das temperatursensitive Element (1) ein ansonsten bekanntes Thermoelement ist.

14. Thermometeranordnung nach einem oder mehreren der vorhergehenden Ansprüche,
dadurch gekennzeichnet,
daß das temperatursensitive Element (1) ein Thermowiderstand ist.
